# EUROPEAN PATENT APPLICATION

(11) **EP 3 367 201 A1**
(43) Date of publication of application: **29.08.2018**
(21) Application number: 17825356.3
(22) Date of filing: 12.12.2017
(51) Int. Cl.: G05D 1/10, G06T 7/00

(54) **METHOD AND DEVICE FOR CONTROLLING FLIGHT OF UNMANNED AERIAL VEHICLE, AND UNMANNED AERIAL VEHICLE**

(30) Priority: 27.12.2016 CN 201611223787
(71) Applicant: Autel Robotics Co., Ltd., Shenzhen, Guangdong 518055 (CN)
(72) Inventor: LI, Zuoguang, Shenzhen Guangdong 518055 (CN)
(74) Representative: Gulde & Partner
(86) International application number: PCT/CN2017/115681
(87) International publication number: WO 2018/121247

(57) **Abstract**

Embodiments of the present invention relate to a method and an apparatus for controlling flight of an unmanned aerial vehicle and an unmanned aerial vehicle. A photographed image including a geometric pattern is obtained, the geometric pattern is identified, and a guiding path is generated according to an identification result, so that the unmanned aerial vehicle is controlled to autonomously fly along the guiding path. Therefore, the autonomous flight can be implemented without human intervention, and the unmanned aerial vehicle has a relatively high degree of intelligence and is conveniently used.

## Description

### CROSS-REFERENCE TO RELATED APPLICATIONS

The present application claims priority to Chinese Patent Application No. 201611223787.3 filed on December 27, 2016, which is incorporated herein by reference in its entirety.

### Technical Field

Embodiments of the present invention relate to the field of unmanned aerial vehicle technologies, and in particular, to a method and an apparatus for controlling flight of an unmanned aerial vehicle and an unmanned aerial vehicle.

### Related Art

Currently, unmanned aerial vehicles are applied to such fields as aerial photography, agriculture, plant protection, selfie, express transportation, disaster rescue, wild animal observation, infectious disease surveillance, mapping, news reports, electric power inspection, disaster relief, film shooting and romantic atmosphere creation, greatly expanding applications of the unmanned aerial vehicles.

In terms of autonomous flight control of an unmanned aerial vehicle, currently, autonomous flight is performed mainly based on a manually set path, and involves a relatively high degree of human intervention. Consequently, the unmanned aerial vehicle is insufficiently intelligent.

### SUMMARY

A major technical problem to be resolved in embodiments of the present invention is to provide a method and an apparatus for controlling flight of an unmanned aerial vehicle and an unmanned aerial vehicle, so that autonomous flight can be implemented without human intervention, and the unmanned aerial vehicle has a relatively high degree of intelligence and is conveniently used.

According to a first aspect, to resolve the foregoing technical problem, one technical solution adopted in an embodiment of the present invention is to provide a method for controlling flight of an unmanned aerial vehicle, including:
obtaining a photographed image including a geometric pattern;
identifying the geometric pattern in the photographed image; and
controlling the unmanned aerial vehicle to fly along an edge or an area between edges of the geometric pattern.

In an embodiment of the present invention, the obtaining a photographed image including a geometric pattern includes:
obtaining a previous frame of photographed image and a current frame of photographed image;
stitching the previous frame of photographed image and the current frame of photographed image; and
the identifying the geometric pattern in the photographed image includes:
   identifying a geometric pattern in a stitched photographed image.

In an embodiment of the present invention, the identifying the geometric pattern in the photographed image includes:
converting the photographed image into a grayscale image; and
performing image processing on the grayscale image to identify the geometric pattern.

In an embodiment of the present invention, the performing image processing on the grayscale image to identify the geometric pattern includes:
performing edge detection and binarization processing on the grayscale image, to obtain a binarized edge image; and
performing detection on the edge image by using a preset algorithm, to identify the geometric pattern.

In an embodiment of the present invention, the method further includes:
determining whether the identified geometric pattern includes at least two geometric patterns;
if yes, determining whether the at least two geometric patterns can be stitched; and
if yes, stitching the at least two geometric patterns.

In an embodiment of the present invention, the determining whether the at least two geometric patterns can be stitched includes:
determining whether grayscale values of the at least two geometric patterns meet a preset condition; and
if yes, determining that the at least two geometric patterns can be stitched.

In an embodiment of the present invention, the determining whether grayscale values of the at least two geometric patterns meet a preset condition includes:
determining whether a difference between the at least two geometric patterns is within a preset range.

In an embodiment of the present invention, the determining whether grayscale values of the at least two geometric patterns meet a preset condition includes:
determining whether a ratio of the at least two geometric patterns is within a preset range.

In an embodiment of the present invention, the method further includes:
if it is determined that the at least two geometric pattern cannot be stitched, sending prompt information to a control terminal to prompt a user to select a geometric pattern.

In an embodiment of the present invention, the method further includes:
generating a guiding path according to the edge or the area between the edges of the geometric pattern; and
the controlling the unmanned aerial vehicle to fly along an edge or an area between edges of the geometric pattern includes:
   controlling the unmanned aerial vehicle to fly along the guiding path.

In an embodiment of the present invention, the method further includes:
obtaining an image photographed by the unmanned aerial vehicle at a start point position;
obtaining images photographed by the unmanned aerial vehicle at preset intervals during the flight;
determining whether an image matching the image photographed at the start point position exists in the images photographed by the unmanned aerial vehicle at the preset intervals during the flight; and
if yes, controlling the unmanned aerial vehicle to end the flight.

In an embodiment of the present invention, the method further includes:
if the image matching the image photographed at the start point position does not exist in the images photographed by the unmanned aerial vehicle during the flight, controlling the unmanned aerial vehicle to end the flight at an end point of the edge or the area between the edges of the geometric pattern.

In an embodiment of the present invention, the geometric pattern includes a pattern formed by any of the following objects:
an electric wire, a communication cable, a pipeline, a wind turbine, a signal tower, a bridge or a road.

According to a second aspect, to resolve the foregoing problem, an embodiment of the present invention provides an apparatus for controlling flight of an unmanned aerial vehicle, including:
an image obtaining module, configured to obtain a photographed image including a geometric pattern;
an identification module, configured to identify the geometric pattern in the photographed image; and
a flight control module, configured to control the unmanned aerial vehicle to fly along an edge or an area between edges of the geometric pattern.

In an embodiment of the present invention, the image obtaining module is further configured to obtain a previous frame of photographed image and a current frame of photographed image, and the identification module is configured to stitch the previous frame of photographed image and the current frame of photographed image and to identify a geometric pattern in a stitched photographed image.

In an embodiment of the present invention, the identification module is specifically configured to:
convert the photographed image into a grayscale image; and
perform image processing on the grayscale image to identify the geometric pattern.

In an embodiment of the present invention, the identification module is specifically configured to:
perform edge detection and binarization processing on the grayscale image, to obtain a binarized edge image; and
perform detection on the edge image by using a preset algorithm, to identify the geometric pattern.

In an embodiment of the present invention, the identification module is further configured to:
determine whether the identified geometric pattern includes at least two geometric patterns;
if yes, determine whether the at least two geometric patterns can be stitched; and
if yes, stitch the at least two geometric patterns.

19. The apparatus according to claim 18, wherein the identification module is further configured to:
determine whether grayscale values of the at least two geometric patterns meet a preset condition; and
if yes, determine that the at least two geometric patterns can be stitched.

In an embodiment of the present invention, the identification module is specifically configured to:
determine whether a difference between the at least two geometric patterns is within a preset range.

In an embodiment of the present invention, the identification module is specifically configured to:
determine whether a ratio of the at least two geometric patterns is within a preset range.

In an embodiment of the present invention, the identification module is specifically configured to:
if it is determined that the at least two geometric pattern cannot be stitched, send prompt information to a control terminal to prompt a user to select a geometric pattern.

23. The apparatus according to any of claims 14 to 22, wherein the apparatus further comprises a path generation module, the path generation module being configured to generate a guiding path according to the edge or the area between the edges of the geometric pattern, and the flight control module being configured to control the unmanned aerial vehicle to fly along the guiding path.

In an embodiment of the present invention, the obtaining module is further configured to:
obtain an image photographed by the unmanned aerial vehicle at a start point position;
obtain images photographed by the unmanned aerial vehicle at preset intervals during the flight; and
the identification module is further configured to:
   determine whether an image matching the image photographed at the start point position exists in the images photographed by the unmanned aerial vehicle at the preset intervals during the flight; and
   if yes, the flight control module controls the unmanned aerial vehicle to end the flight.

In an embodiment of the present invention, if the identification module determines that the image matching the image photographed at the start point position does not exist in the images photographed by the unmanned aerial vehicle during the flight, the flight control module controls the unmanned aerial vehicle to end the flight at an end point of the edge or the area between the edges of the geometric pattern.

In an embodiment of the present invention,
the geometric pattern includes a pattern formed by any of the following objects:
an electric wire, a communication cable, a pipeline, a wind turbine, a signal tower, a bridge or a road.

According to a third aspect, to resolve the foregoing problem, an embodiment of the present invention provides an unmanned aerial vehicle, including:
a vehicle body;
an image obtaining apparatus, connected to the vehicle body, and configured to obtain a photographed image including a geometric pattern;
a vision chip, disposed in the vehicle body, and configured to identify the geometric pattern in the photographed image; and
a flight control chip, configured to control the unmanned aerial vehicle to fly along an edge or an area between edges of the geometric pattern.

In an embodiment of the present invention, the image obtaining apparatus is further configured to obtain a previous frame of photographed image and a current frame of photographed image, and the vision chip is configured to stitch the previous frame of photographed image and the current frame of photographed image and to identify a geometric pattern in a stitched photographed image.

In an embodiment of the present invention, the vision chip is specifically configured to:
convert the photographed image into a grayscale image; and
perform image processing on the grayscale image to identify the geometric pattern.

In an embodiment of the present invention, the vision chip is specifically configured to:
perform edge detection and binarization processing on the grayscale image, to obtain a binarized edge image; and
perform detection on the edge image by using a preset algorithm, to identify the geometric pattern.

In an embodiment of the present invention, the vision chip is further configured to:
determine whether the identified geometric pattern includes at least two geometric patterns;
if yes, determine whether the at least two geometric patterns can be stitched; and
if yes, stitch the at least two geometric patterns.

In an embodiment of the present invention, the vision chip is specifically configured to:
determine whether grayscale values of the at least two geometric patterns meet a preset condition; and
if yes, determine that the at least two geometric patterns can be stitched.

In an embodiment of the present invention, the vision chip is specifically configured to:
determine whether a difference between the at least two geometric patterns is within a preset range.

In an embodiment of the present invention, the vision chip is specifically configured to:
determine whether a ratio of the at least two geometric patterns is within a preset range.

In an embodiment of the present invention, the vision chip is specifically configured to:
if it is determined that the at least two geometric pattern cannot be stitched, send prompt information to a control terminal to prompt a user to select a geometric pattern.

In an embodiment of the present invention, the unmanned aerial vehicle further includes a processor, the processor being configured to generate a guiding path according to the edge or the area between the edges of the geometric pattern, and the flight control chip being configured to control the unmanned aerial vehicle to fly along the guiding path.

In an embodiment of the present invention, the image obtaining apparatus is further configured to:
obtain an image photographed by the unmanned aerial vehicle at a start point position;
obtain images photographed by the unmanned aerial vehicle at preset intervals during the flight; and
the vision chip is further configured to:
   determine whether an image matching the image photographed at the start point position exists in the images photographed by the unmanned aerial vehicle at the preset intervals during the flight; and
   if yes, the flight control chip controls the unmanned aerial vehicle to end the flight.

In an embodiment of the present invention, if the vision chip determines that the image matching the image photographed at the start point position does not exist in the images photographed by the unmanned aerial vehicle during the flight, the flight control chip controls the unmanned aerial vehicle to end the flight at an end point of the edge or the area between the edges of the geometric pattern.

In an embodiment of the present invention,
the geometric pattern includes a pattern formed by any of the following objects:
an electric wire, a communication cable, a pipeline, a wind turbine, a signal tower, a bridge or a road.

According to a fourth aspect, to resolve the foregoing problem, an embodiment of the present invention provides an unmanned aerial vehicle, including a memory and a processor, where the memory stores a computer program, and when the computer program is executed by the processor, the processor is enabled to perform the foregoing method for controlling an unmanned aerial vehicle.

According to a fourth aspect, to resolve the foregoing problem, an embodiment of the present invention provides a non-volatile computer readable storage medium, where the computer readable storage medium stores a computer executable instruction, and when the computer executable instruction is executed by the unmanned aerial vehicle, the unmanned aerial vehicle is enabled to perform the foregoing method for controlling an unmanned aerial vehicle.

According to the method and the apparatus for controlling flight of an unmanned aerial vehicle provided in the embodiments of the present invention, a photographed image including a geometric pattern is obtained, the geometric pattern is identified, and a guiding path is generated according to an identification result, so that the unmanned aerial vehicle is controlled to autonomously fly along the guiding path. Therefore, the autonomous flight can be implemented without human intervention, and the unmanned aerial vehicle has a relatively high degree of intelligence and is conveniently used.

### BRIEF DESCRIPTION OF THE DRAWINGS

One or more embodiments are exemplarily described by using the figures in the accompanying drawings. The exemplary descriptions do not constitute limitations to embodiments. Elements having same reference numerals in the accompanying drawings represent similar elements, and unless indicated otherwise, the figures in the accompanying drawings do not constitute proportion limitations.
FIG. 1 is a schematic structural diagram of an unmanned aerial vehicle according to an embodiment of the present invention;
FIG. 2 is a diagram of an application scenario of the unmanned aerial vehicle shown in FIG. 1;
FIG. 3 is a schematic diagram of another actual application in a process of generating a guiding path;
FIG. 4 is a schematic diagram of an actual application in which geometric patterns are stitched according to an user operation;
FIG. 5 is a flowchart of a method for controlling flight of an unmanned aerial vehicle according to an embodiment of the present invention;
FIG. 6 is a flowchart of a method for controlling flight of an unmanned aerial vehicle according to another embodiment of the present invention;
FIG. 7 is a flowchart of an apparatus for controlling flight of an unmanned aerial vehicle according to an embodiment of the present invention; and
FIG. 8 is a schematic structural diagram of hardware of an unmanned aerial vehicle performing a method for controlling flight of an unmanned aerial vehicle according to an embodiment of the present invention.

### DETAILED DESCRIPTION

To make the objectives, technical solutions, and advantages of the present invention clearer and more comprehensible, the following further describes the present invention in detail with reference to the accompanying drawings and embodiments. It should be understood that, the specific embodiments described herein are merely used for explaining the present invention, and are not intended to limit the present invention.

In addition, technical features involved in the embodiments of the present invention described below may be randomly combined with each other provided that there is no conflict.

The following describes the embodiments in detail with reference to the specific accompanying drawings.

The present invention provides a method and an apparatus for controlling flight of an unmanned aerial vehicle and an unmanned aerial vehicle using same. By using the method or the apparatus for controlling flight of an unmanned aerial vehicle, an unmanned aerial vehicle can fly according to an identified geometric pattern. For example, after a marking line on an expressway is identified by using an image algorithm, the unmanned aerial vehicle may fly along the expressway. In this way, flight of the unmanned aerial vehicle is more convenient, intelligent and accurate. Further, the unmanned aerial vehicle may autonomously fly indoor by configuring ultrasound and an optical flow on the unmanned aerial vehicle.

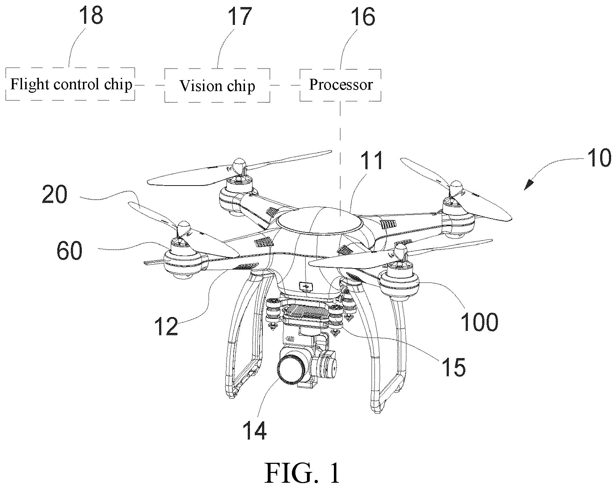

As shown in FIG. 1, an unmanned aerial vehicle 10 includes a vehicle body 11, an arm 12 connected to the vehicle body 11, a power apparatus 13 disposed on one end of the arm 12, a gimbal 15 connected to the vehicle body 11, an image obtaining apparatus 14 connected to the gimbal 13 and a processor 16, a vision chip 17 and a flight control chip 18 that are disposed inside the vehicle body 11.

In this embodiment, the number of arms 12 is 4, that is, the unmanned aerial vehicle is a quadrotor. In other possible embodiments, the number of the arms 12 may alternatively be 3, 6, 8, 10 or the like. The unmanned aerial vehicle 10 may alternatively be another movable object, for example, a manned vehicle, a model airplane, an unmanned airship, a fixed-wing unmanned aerial vehicle or an unmanned hot balloon.

The power apparatus 13 includes a motor 132 disposed at one end of the arm 12 and a propeller 131 connected to a rotating shaft of the motor 132. The rotating shaft of the motor 132 rotates to drive the propeller 131 to rotate, to provide a lifting force for the unmanned aerial vehicle 10.

The gimbal 15 is configured to alleviate or even eliminate vibration transferred by the power apparatus 13 to the image obtaining apparatus 14, to ensure that the image obtaining apparatus 14 can photograph a stable and clear image or video.

The image obtaining apparatus 14 may be a device such as a binocular camera, a monocular camera, an infrared image device, an ultraviolet image device or a video camera. The image obtaining apparatus 14 may be directly carried on the unmanned aerial vehicle 10, or may be carried on the unmanned aerial vehicle 10 by using the gimbal 15 shown in this embodiment. The gimbal 15 allows the image obtaining apparatus 14 to rotate around at least one shaft relative to the unmanned aerial vehicle 10.

The processor 16 may include multiple functional units, for example, a target identification unit configured to identify a target, a tracking unit configured to track a particular target, a navigation unit configured to navigate an aircraft (for example, the Global Positioning System (GPS) or Beidou) and a data processing unit configured to process environment information obtained by a related in-vehicle device (for example, the image obtaining apparatus 14).

In an embodiment of the present invention, both the flight control chip 17 configured to control flight and the vision chip 18 configured to process an image may be integrated with the processor 16.

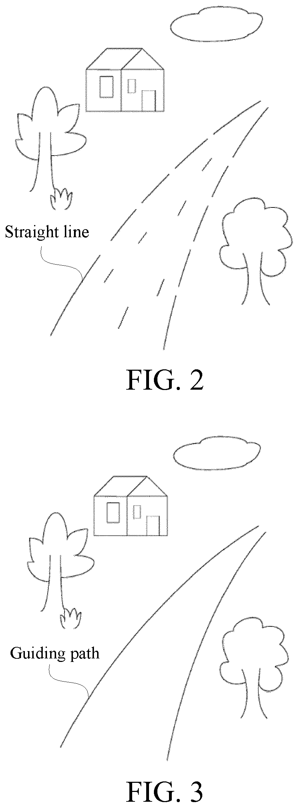

FIG. 2 is a diagram of an application scenario according to an embodiment of the present invention. The unmanned aerial vehicle 10 obtains a photographed image including a geometric pattern by using the carried image obtaining apparatus 14. In this embodiment, the geometric pattern is an arc trajectroy formed by an edge or a marking line of a road. In other possible embodiments, the geometric pattern may alternatively be a straight line, a curve, a circle, an ellipse or a geometric pattern that is formed by stitching these shapes.

In other embodiments of the present invention, the geometric pattern may alternatively be a pattern formed by any of the following objects: an electric wire, a communication cable, a pipeline, a wind turbine, a signal tower, a bridge or a road.

For example, when needing to implement circuit inspection, the unmanned aerial vehicle 10 only needs to identify a straight line or curve formed by an electric wire. Similarly, when needing to implement detection on the pipeline, the wind turbine, the signal tower and the bridge or road inspection, the unmanned aerial vehicle 10 only needs to identify a geometric pattern formed by these objects. In other possible embodiments of the present invention, the image obtaining apparatus 14 may further obtain a previous frame of photographed image and a current frame of photographed image, and the vision chip 18 stitches the previous frame of photographed image and the current frame of photographed image, to identify a geometric pattern in a stitched photographed image.

The vision chip 18 identifies the geometric pattern included in the photographed image according to the photographed image including the geometric pattern that is obtained by the image obtaining apparatus 14.

In an embodiment of the present invention, the vision chip 18 first converts an image photographed by the image obtaining apparatus 14 into a grayscale image, then performs edge detection and binarization processing on the grayscale image to obtain a binarized edge image, and finally performs detection on the binarized edge image by using a preset algorithm to identify the geometric pattern.

For example, if an image photographed by the image obtaining apparatus 14 is an RGB image, the vision chip 18 converts the RGB image into a grayscale image, so that the vision chip 18 may perform edge detection and binarization processing on the grayscale image by using a Canny operator, to obtain a binarized edge image, and further perform edge detection on the edge image by using the Hough transform algorithm, to obtain at least one type of geometric pattern.

In an embodiment of the present invention, the vision chip 18 needs to further determine whether the geometric pattern identified by the vision chip 18 includes at least two geometric patterns; if yes, the vision chip 18 needs to determine whether the at least two geometric pattern can be stitched; and if yes, the vision chip 18 stitches geometric patterns, in the at least two geometric pattern, whose a difference between grayscale values is within a preset range, to obtain a stitched pattern. The processor 16 generates a guiding path according to the stitched pattern.

The difference may be a difference between grayscale values or average grayscale values of the two geometric patterns, or may be a ratio of grayscale values or average grayscale values of the two geometric patterns. The preset range may be set according to a requirement of an actual application. For example, a straight line and a curve are stitched. For another example, a curve and an arc are stitched. For still another example, two curves are stitched. As shown in FIG. 3, two neighboring straight lines are stitched, to generate a guiding path. A difference between grayscale values or average grayscale values of the two neighboring straight lines is within the preset range.

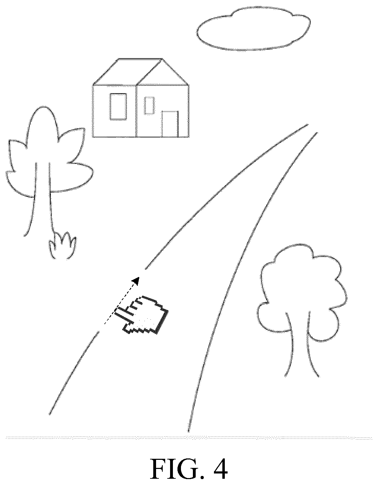

In an embodiment of the present invention, if the vision chip 18 determines that the at least two geometric patterns cannot be stitched, the vision chip 18 needs to request a user for a decision, and sends prompt information to a control terminal, to prompt the user to choose one from the at least two geometric patterns. As shown in FIG. 4, when a geometric pattern that cannot be intelligently stitched exists in the at least one type of geometric pattern, the unmanned aerial vehicle 10 may wirelessly send the geometric pattern to the control terminal such as a mobile phone or a tablet computer that is in communication connection with the unmanned aerial vehicle 10 for display. The user operates the control terminal to stitch two neighboring straight lines, to generate a guiding path, thereby conveniently controlling the unmanned aerial vehicle to autonomously fly along the guiding path.

After the vision chip 18 identifies the geometric pattern in the photographed image, the flight control chip 17 controls the unmanned aerial vehicle to fly along an edge or an area between edges of the geometric pattern. For example, the unmanned aerial vehicle is controlled to fly along an edge of a road or an area between two edges of a road.

The processor 16 generates the guiding path according to the edge or the area between the edges of the geometric pattern identified by the vision chip 18, and the flight control chip 17 controls the unmanned aerial vehicle 10 to fly along the guiding path.

In an optional embodiment, if the guiding path includes a closed loop line feature, to enable the unmanned aerial vehicle to automatically end flight after flying one or more circles, the image obtaining apparatus 10 may further obtain an image photographed by the unmanned aerial vehicle 10 at a start point position, and obtain photographed images obtained by the unmanned aerial vehicle 10 at preset intervals in a process that the unmanned aerial vehicle 10 autonomously flies along the guiding path, and then determines whether an image matching the image photographed at the start point position exists in the photographed images obtained at the preset intervals. If yes, it indicates that the unmanned aerial vehicle 10 completes closed loop flight, and the flight control chip 17 controls the unmanned aerial vehicle to end the flight. In an embodiment of the present invention, a scale-invariant feature transform (SIFT) feature point matching algorithm may be adopted. When an Euclidean distance between a SIFT feature point set of the geometric pattern in the photographed image obtained in the process that the unmanned aerial vehicle 10 autonomously flies along the guiding path and a SIFT feature point of a geometric pattern in the photographed image at the start point position is within a preset threshold range, it may be determined that the image matching the image photographed at the start point position exists, so that the unmanned aerial vehicle is controlled to end the flight. The unmanned aerial vehicle ends the flight in a manner such as hovering or landing.

In an optional embodiment, if the guiding path includes a non-closed linear feature, the unmanned aerial vehicle 10 may be controlled to automatically end the flight when the unmanned aerial vehicle 10 arrives at an end point of the guiding path having the non-closed linear feature.

In an optional embodiment, to conveniently view a position of the unmanned aerial vehicle on a map and a flight path by using the control terminal, the guiding path may be overlaid, according to GPS position information of the unmanned aerial vehicle, on the map displayed by using the control terminal.

According to the unmanned aerial vehicle provided in this embodiment of the present invention, a photographed image including a geometric pattern is obtained, the geometric pattern is identified, and a guiding path is generated according to an identification result, so that the unmanned aerial vehicle autonomously flies along the guiding path. Therefore, the autonomous flight can be implemented without human intervention, and the unmanned aerial vehicle has a relatively high degree of intelligence and is conveniently used.

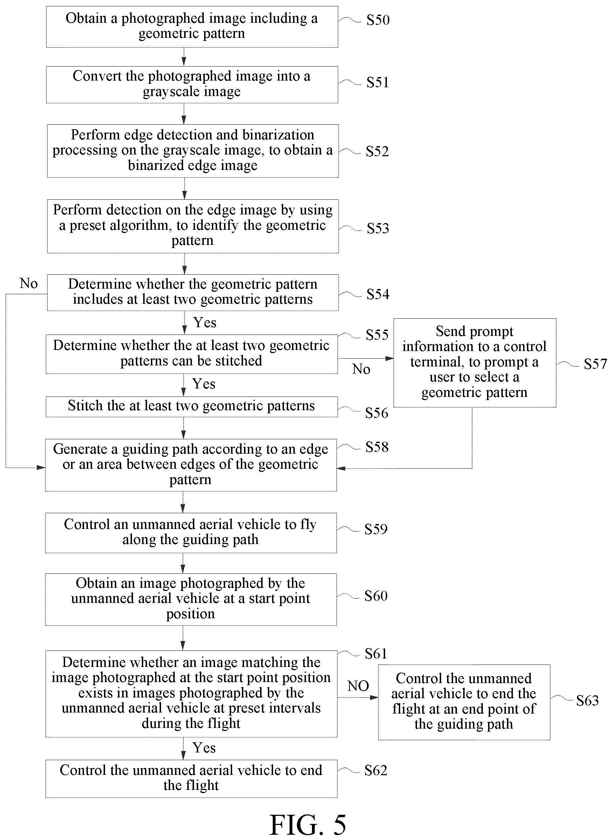

FIG. 5 is a flowchart of a method for controlling flight of an unmanned aerial vehicle according to an embodiment of the present invention. The method includes the following steps.

S50: Obtain a photographed image including a geometric pattern.

The geometric pattern is an arc formed by an edge or a marking line of a road. In other possible embodiments, the geometric pattern may alternatively be a straight line, a curve, a circle, an ellipse or a geometric pattern that is formed by stitching these shapes.

In other embodiments of the present invention, the geometric pattern may alternatively be a pattern formed by any of the following objects: an electric wire, a communication cable, a pipeline, a wind turbine, a signal tower, a bridge or a road.

For example, when needing to implement circuit inspection, an unmanned aerial vehicle 10 only needs to identify a straight line or curve formed by an electric wire. Similarly, when needing to implement detection on the pipeline, the wind turbine, the signal tower and the bridge or road inspection, the unmanned aerial vehicle 10 only needs to identify a geometric pattern formed by these objects.

In other embodiments of the present invention, a previous frame of photographed image and a next frame of photographed image may further be obtained, and the previous frame of the photographed image and the next frame of the photographed image are stitched to obtain a stitched photographed image.

A geometric pattern in the photographed image or in the stitched photographed image is identified. In an embodiment of the present invention, identifying the geometric pattern in the photographed image includes the following steps:
S51: Convert the photographed image into a grayscale image.
S52. Perform edge detection and binarization processing on the grayscale image, to obtain a binarized edge image.
S53: Perform detection on the edge image by using a preset algorithm, to identify the geometric pattern.
   For example, if the obtained image is an RGB image, the RGB image is first converted into a grayscale image, so that edge detection and binarization processing may be performed on the grayscale image by using a Canny operator, to obtain a binarized edge image, and then edge detection is further performed on the edge image by using the preset algorithm such as the Hough transform algorithm, to obtain at least one type of geometric pattern.
S54: Determine whether the identified geometric pattern includes at least two geometric patterns.
   If yes, perform step 55; or if not, perform step 58.
S55. Determine whether the at least two geometric patterns can be stitched.

In an embodiment of the present invention, whether the at least two geometric patterns can be stitched is determined by determining whether grayscale values of the at least two geometric patterns meet a preset condition. The preset condition may be whether a difference between the grayscale values of the at least two geometric patterns is within a preset range, or may be whether a ratio of the grayscale values of the at least two geometric patterns is within a preset range. The preset range may be set as required. For example, a straight line and a curve are stitched. For another example, a curve and an arc are stitched. For still another example, two curves are stitched. As shown in FIG. 3, two neighboring straight lines are stitched, to generate a guiding path. A difference between grayscale values or average grayscale values of the two neighboring straight lines is within the preset range.

If yes, perform step S56 of stitching the at least two geometric patterns.

If not, perform step S57 of sending prompt information to a control terminal, to prompt a user to select a geometric pattern.

If it is determined that the at least two geometric patterns cannot be stitched, the user needs to be requested for a decision, and the prompt information is sent to the control terminal, to prompt the user to choose one from the at least two geometric patterns. As shown in FIG. 4, when a geometric pattern that cannot be intelligently stitched exists in at least one type of geometric pattern, the geometric pattern may be wirelessly sent to the control terminal such as a mobile phone or a tablet computer for display. The user operates the control terminal to stitch two neighboring straight lines, to generate a guiding path, thereby conveniently controlling the unmanned aerial vehicle to autonomously fly along the guiding path.

S58: Generate a guiding path according to an edge or an area between edges of the geometric pattern.

S59: Control the unmanned aerial vehicle to fly along the guiding path.

S60: Obtain an image photographed by the unmanned aerial vehicle at a start point position.

S61: Determine whether an image matching the image photographed at the start point position exists in images photographed by the unmanned aerial vehicle at preset intervals during the flight.

If yes, perform step S62 of controlling the unmanned aerial vehicle to end the flight.

If not, perform step S63 of controlling the unmanned aerial vehicle to end the flight at an end point of the guiding path.

For details about the steps in the method, refer to the foregoing descriptions, and details are not described herein again.

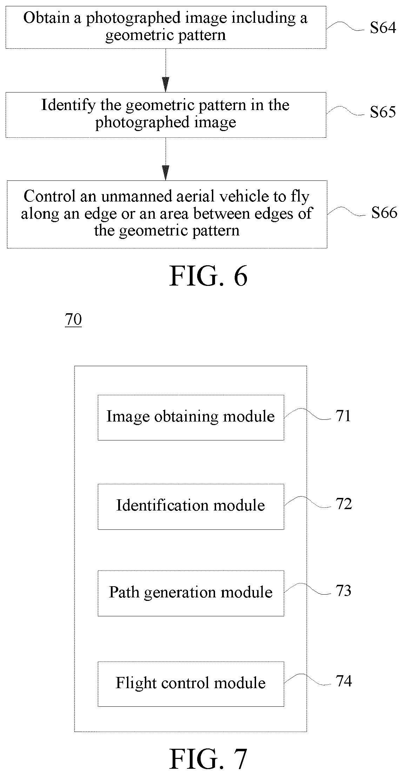

FIG. 6 is a flowchart of a method for controlling flight of an unmanned aerial vehicle according to another embodiment of the present invention. The method includes the following steps:
S64: Obtain a photographed image including a geometric pattern.
S65: Identify the geometric pattern in the photographed image.
S66: Control an unmanned aerial vehicle to fly along an edge or an area between edges of the geometric pattern.

For details about the steps in the method, refer to the foregoing descriptions, and details are not described herein again.

FIG. 7 is a structural block diagram of an apparatus for controlling flight of an unmanned aerial vehicle according to an embodiment of the present invention. The apparatus 70 includes:
an image obtaining module 71, configured to obtain a photographed image including a geometric pattern;
an identification module 72, configured to identify the geometric pattern in the photographed image; and
a flight control module 74, configured to control the unmanned aerial vehicle to fly along an edge or an area between edges of the geometric pattern.

In an embodiment of the present invention, the image obtaining module 71 is further configured to obtain a previous frame of photographed image and a current frame of photographed image, and the identification module 72 is configured to stitch the previous frame of photographed image and the current frame of photographed image and to identify a geometric pattern in a stitched photographed image.

In an embodiment of the present invention, the identification module 72 is specifically configured to:
convert the photographed image into a grayscale image; and
perform image processing on the grayscale image to identify the geometric pattern.

In an embodiment of the present invention, the identification module 72 is specifically configured to:
perform edge detection and binarization processing on the grayscale image, to obtain a binarized edge image; and
perform detection on the edge image by using a preset algorithm, to identify the geometric pattern.

In an embodiment of the present invention, the identification module 72 is further configured to:
determine whether the identified geometric pattern includes at least two geometric patterns;
if yes, determine whether the at least two geometric patterns can be stitched; and
if yes, stitch the at least two geometric patterns.

In an embodiment of the present invention, the identification module 72 is further configured to:
determine whether grayscale values of the at least two geometric patterns meet a preset condition; and
if yes, determine that the at least two geometric patterns can be stitched.

In an embodiment of the present invention, the identification module 72 is specifically configured to:
determine whether a difference between the at least two geometric patterns is within a preset range.

In an embodiment of the present invention, the identification module 72 is specifically configured to:
determine whether a ratio of the at least two geometric patterns is within a preset range.

In an embodiment of the present invention, the identification module 72 is specifically configured to:
if it is determined that the at least two geometric pattern cannot be stitched, send prompt information to a control terminal to prompt a user to select a geometric pattern.

In an embodiment of the present invention, the apparatus further includes a path generation module 73. The path generation module 73 is configured to generate a guiding path according to the edge or the area between the edges of the geometric pattern, and the flight control module 74 is configured to control the unmanned aerial vehicle to fly along the guiding path.

In an embodiment of the present invention, the obtaining module 71 is further configured to:
obtain an image photographed by the unmanned aerial vehicle at a start point position;
obtain images photographed by the unmanned aerial vehicle at preset intervals during the flight;
the identification module 72 is further configured to:
   determine whether an image matching the image photographed at the start point position exists in the images photographed by the unmanned aerial vehicle at the preset intervals during the flight; and
   if yes, the flight control module controls the unmanned aerial vehicle to end the flight.

In an embodiment of the present invention, if the identification module 72 determines that the image matching the image photographed at the start point position does not exist in the images photographed by the unmanned aerial vehicle during the flight, the flight control module 74 controls the unmanned aerial vehicle to end the flight at an end point of the edge or the area between the edges of the geometric pattern.

In an embodiment of the present invention,
the geometric pattern includes a pattern formed by any of the following objects:
an electric wire, a communication cable, a pipeline, a wind turbine, a signal tower, a bridge or a road.

For details about the apparatus, refer to the foregoing descriptions, and details are not described herein again.

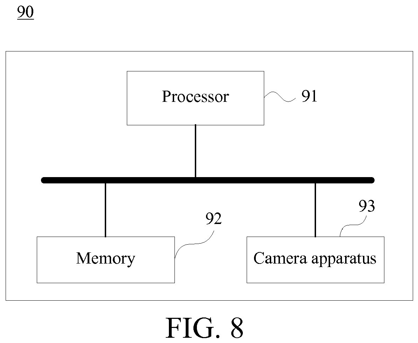

FIG. 8 is a schematic structural diagram of hardware of an unmanned aerial vehicle 90 performing a method for controlling flight of an unmanned aerial vehicle according to an embodiment of the present invention. As shown in FIG. 8, the unmanned aerial vehicle 90 may include:
one or more processors 91, a memory 92 and a camera apparatus 93. For example, in FIG. 8, the unmanned aerial vehicle 90 includes one processor 91.

The processor 91, the memory 92 and the camera apparatus 93 may be connected to each other by using a bus or in another manner. For example, in FIG. 8, the processor 91, the memory 92 and the camera apparatus 93 are connected to each other by using a bus. The processor 91 and the memory 92 may be disposed inside a vehicle body of the unmanned aerial vehicle 90. The camera apparatus 93 may be connected to the vehicle body, and disposed outside the vehicle body.

As a non-volatile computer readable storage medium, the memory 92 may be configured to store a non-volatile software program, a non-volatile computer executable program and modules, for example, program instructions/modules (for example, the image obtaining module 71, the identification module 72, the path generation module 73 and the flight control module 74 that are shown in FIG. 7) corresponding to the autonomous flight method of an unmanned aerial vehicle in the embodiments of the present invention. The processor 91 and the camera apparatus 93 performs various function applications and data processing of the unmanned aerial vehicle 90, that is, implements the autonomous flight method of the unmanned aerial vehicle in the foregoing method embodiments, by running the non-volatile software program, the instructions and the modules that are stored in the memory 92.

The memory 92 may include a program storage area and a data storage area. The program storage area may store an operating system and an application program required by at least one function. The data storage area may store data created according to use of a photographing and image composition apparatus. In addition, the memory 92 may include a high-speed random access memory, or may include a non-volatile memory, for example, at least one magnetic disk storage device, a flash storage device or another non-volatile solid state storage device. In some embodiments, the memory 92 may optionally include a memory that is remotely disposed relative to the processor 91. The memory may be connected to the photographing and image composition apparatus by using a network. Examples of the network include, but are not limited to, the Internet, an intranet, a local area network, a mobile communications network or a combination thereof.

The one or more modules are stored in the memory 92. When the one or more modules are executed by the processor 91, the autonomous flight method of the unmanned aerial vehicle is performed. For example, the step S50 to the step S63 in FIG. 5 are performed, the step S64 to the step S66 in FIG. 6 are performed, and functions of the image obtaining module 71, the identification module 72, the path generation module 73 and the flight control module 74 in FIG. 7 are performed.

The unmanned aerial vehicle 90 may perform the autonomous flight method of an unmanned aerial vehicle according to the embodiments of the present invention, and has functional modules and beneficial effects that are corresponding to implementation of the method. For technical details that are not described in this embodiment, refer to the autonomous flight method of an unmanned aerial vehicle according to the embodiments of the present invention.

An embodiment of the present invention provides a non-volatile computer readable storage medium. The computer readable storage medium stores a computer executable instruction. The computer readable instructions are executed by one or more processors, for example, one processor 91 in FIG. 8, so that the one or more processors can perform the autonomous flight method of an unmanned aerial vehicle in any of the foregoing method embodiments. For example, the one or more processors can perform the step S50 to the step S63 in FIG. 5, perform the step S64 to the step S66 in FIG. 6, and perform functions of the image obtaining module 71, the identification module 72, the path generation module 73 and the flight control module 74 that are shown in FIG. 7.

The apparatus embodiments described above are merely exemplary. The units described as separate parts may or may not be physically separate, and parts displayed as units may or may not be physical units, may be located in one position, or may be distributed on a plurality of network units. Some or all of the modules may be selected according to actual requirements to achieve the objectives of the solutions of the embodiments.

According to the foregoing descriptions of the embodiments, persons of ordinary skill in the art may clearly understand that the embodiments may be implemented by using software and a general-purpose hardware platform, or certainly may be implemented by using hardware. Persons of ordinary skill in the art may understand that all or some of the processes of the methods in the embodiments may be implemented by a computer program instructing relevant hardware. The program may be stored in a computer readable storage medium. When the program is executed, the processes of the methods in the embodiments are performed. The storage medium may include a magnetic disk, an optical disc, a read-only memory (ROM), a random access memory (RAM) or the like.

It should be finally noted that, the foregoing embodiments are merely intended for describing the technical solutions of the present application, rather than limiting the present application. According to concepts of the present application, technical features in the foregoing embodiments or different embodiments may also be combined, steps may be implemented in any sequence, and there may be many other variations of the present application in different aspects. For simplicity, the variations are not provided in details. Although the present application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions in the embodiments of the present application.

## Claims

1. A method for controlling flight of an unmanned aerial vehicle, comprising:
obtaining a photographed image comprising a geometric pattern;
identifying the geometric pattern in the photographed image; and
controlling the unmanned aerial vehicle to fly along an edge or an area between edges of the geometric pattern.

2. The method according to claim 1, wherein the obtaining a photographed image comprising a geometric pattern comprises:
obtaining a previous frame of photographed image and a current frame of photographed image;
stitching the previous frame of photographed image and the current frame of photographed image; and
the identifying the geometric pattern in the photographed image comprises:
identifying a geometric pattern in a stitched photographed image.

3. The method according to claim 1 or 2, wherein the identifying the geometric pattern in the photographed image comprises:
converting the photographed image into a grayscale image; and
performing image processing on the grayscale image to identify the geometric pattern.

4. The method according to claim 3, wherein the performing image processing on the grayscale image to identify the geometric pattern comprises:
performing edge detection and binarization processing on the grayscale image, to obtain a binarized edge image; and
performing detection on the edge image by using a preset algorithm, to identify the geometric pattern.

5. The method according to claim 4, wherein the method further comprises:
determining whether the identified geometric pattern comprises at least two geometric patterns;
if yes, determining whether the at least two geometric patterns can be stitched; and
if yes, stitching the at least two geometric patterns.

6. The method according to claim 5, wherein the determining whether the at least two geometric patterns can be stitched comprises:
determining whether grayscale values of the at least two geometric patterns meet a preset condition; and
if yes, determining that the at least two geometric patterns can be stitched.

7. The method according to claim 6, wherein the determining whether grayscale values of the at least two geometric patterns meet a preset condition comprises:
determining whether a difference between the at least two geometric patterns is within a preset range.

8. The method according to claim 6, wherein the determining whether grayscale values of the at least two geometric patterns meet a preset condition comprises:
determining whether a ratio of the at least two geometric patterns is within a preset range.

9. The method according to any of claims 5 to 8, wherein the method further comprises:
if it is determined that the at least two geometric pattern cannot be stitched, sending prompt information to a control terminal to prompt a user to select a geometric pattern.

10. The method according to any of claims 1 to 9, wherein the method further comprises:
generating a guiding path according to the edge or the area between the edges of the geometric pattern; and
the controlling the unmanned aerial vehicle to fly along an edge or an area between edges of the geometric pattern comprises:
controlling the unmanned aerial vehicle to fly along the guiding path.

11. The method according to any of claims 1 to 10, wherein the method further comprises:
obtaining an image photographed by the unmanned aerial vehicle at a start point position;
obtaining images photographed by the unmanned aerial vehicle at preset intervals during the flight;
determining whether an image matching the image photographed at the start point position exists in the images photographed by the unmanned aerial vehicle at the preset intervals during the flight; and
if yes, controlling the unmanned aerial vehicle to end the flight.

12. The method according to claim 11, wherein the method further comprises:
if the image matching the image photographed at the start point position does not exist in the images photographed by the unmanned aerial vehicle during the flight, controlling the unmanned aerial vehicle to end the flight at an end point of the edge or the area between the edges of the geometric pattern.

13. The method according to any of claims 1 to 12, wherein the geometric pattern comprises a pattern formed by any of the following objects:
an electric wire, a communication cable, a pipeline, a wind turbine, a signal tower, a bridge or a road.

14. An apparatus for controlling flight of an unmanned aerial vehicle, comprising:
an image obtaining module, configured to obtain a photographed image comprising a geometric pattern;
an identification module, configured to identify the geometric pattern in the photographed image; and
a flight control module, configured to control the unmanned aerial vehicle to fly along an edge or an area between edges of the geometric pattern.

15. The apparatus according to claim 14, wherein the image obtaining module is further configured to obtain a previous frame of photographed image and a current frame of photographed image, and the identification module is configured to stitch the previous frame of photographed image and the current frame of photographed image and to identify a geometric pattern in a stitched photographed image.

16. The apparatus according to claim 14 or 15, wherein the identification module is specifically configured to:
convert the photographed image into a grayscale image; and
perform image processing on the grayscale image to identify the geometric pattern.

17. The apparatus according to claim 16, wherein the identification module is specifically configured to:
perform edge detection and binarization processing on the grayscale image, to obtain a binarized edge image; and
perform detection on the edge image by using a preset algorithm, to identify the geometric pattern.

18. The apparatus according to claim 17, wherein the identification module is further configured to:
determine whether the identified geometric pattern comprises at least two geometric patterns;
if yes, determine whether the at least two geometric patterns can be stitched; and
if yes, stitch the at least two geometric patterns.

19. The apparatus according to claim 18, wherein the identification module is further configured to:
determine whether grayscale values of the at least two geometric patterns meet a preset condition; and
if yes, determine that the at least two geometric patterns can be stitched.

20. The apparatus according to claim 19, wherein the identification module is specifically configured to:
determine whether a difference between the at least two geometric patterns is within a preset range.

21. The apparatus according to claim 19, wherein the identification module is specifically configured to:
determine whether a ratio of the at least two geometric patterns is within a preset range.

22. The apparatus according to any one of claims 18 to 21, wherein the identification module is specifically configured to:
if it is determined that the at least two geometric pattern cannot be stitched, send prompt information to a control terminal to prompt a user to select a geometric pattern.

23. The apparatus according to any of claims 14 to 22, wherein the apparatus further comprises a path generation module, the path generation module being configured to generate a guiding path according to the edge or the area between the edges of the geometric pattern, and the flight control module being configured to control the unmanned aerial vehicle to fly along the guiding path.

24. The apparatus according to any of claims 14 to 23, wherein the obtaining module is further configured to:
obtain an image photographed by the unmanned aerial vehicle at a start point position;
obtain images photographed by the unmanned aerial vehicle at preset intervals during the flight; and
the identification module is further configured to:
determine whether an image matching the image photographed at the start point position exists in the images photographed by the unmanned aerial vehicle at the preset intervals during the flight; and
if yes, the flight control module controls the unmanned aerial vehicle to end the flight.

25. The apparatus according to claim 24, wherein if the identification module determines that the image matching the image photographed at the start point position does not exist in the images photographed by the unmanned aerial vehicle during the flight, the flight control module controls the unmanned aerial vehicle to end the flight at an end point of the edge or the area between the edges of the geometric pattern.

26. The apparatus according to any of claims 14 to 25, wherein
the geometric pattern comprises a pattern formed by any of the following objects:
an electric wire, a communication cable, a pipeline, a wind turbine, a signal tower, a bridge or a road.

27. An unmanned aerial vehicle, comprising:
a vehicle body;
an image obtaining apparatus, connected to the vehicle body, and configured to obtain a photographed image comprising a geometric pattern;
a vision chip, disposed in the vehicle body, and configured to identify the geometric pattern in the photographed image; and
a flight control chip, configured to control the unmanned aerial vehicle to fly along an edge or an area between edges of the geometric pattern.

28. The unmanned aerial vehicle according to claim 27, wherein the image obtaining apparatus is further configured to obtain a previous frame of photographed image and a current frame of photographed image, and the vision chip is configured to stitch the previous frame of photographed image and the current frame of photographed image and to identify a geometric pattern in a stitched photographed image.

29. The unmanned aerial vehicle according to claim 27 or 28, wherein the vision chip is specifically configured to:
convert the photographed image into a grayscale image; and
perform image processing on the grayscale image to identify the geometric pattern.

30. The unmanned aerial vehicle according to claim 29, wherein the vision chip is specifically configured to:
perform edge detection and binarization processing on the grayscale image, to obtain a binarized edge image; and
perform detection on the edge image by using a preset algorithm, to identify the geometric pattern.

31. The unmanned aerial vehicle according to claim 30, wherein the vision chip is further configured to:
determine whether the identified geometric pattern comprises at least two geometric patterns;
if yes, determine whether the at least two geometric patterns can be stitched; and
if yes, stitch the at least two geometric patterns.

32. The unmanned aerial vehicle according to claim 31, wherein the vision chip is specifically configured to:
determine whether grayscale values of the at least two geometric patterns meet a preset condition; and
if yes, determine that the at least two geometric patterns can be stitched.

33. The unmanned aerial vehicle according to claim 32, wherein the vision chip is specifically configured to:
determine whether a difference between the at least two geometric patterns is within a preset range.

34. The unmanned aerial vehicle according to claim 32, wherein the vision chip is specifically configured to:
determine whether a ratio of the at least two geometric patterns is within a preset range.

35. The unmanned aerial vehicle according to claim 31, wherein the vision chip is specifically configured to:
if it is determined that the at least two geometric pattern cannot be stitched, send prompt information to a control terminal to prompt a user to select a geometric pattern.

36. The unmanned aerial vehicle according to any of claims 37 to 35, wherein the unmanned aerial vehicle further comprises a processor, the processor being configured to generate a guiding path according to the edge or the area between the edges of the geometric pattern, and the flight control chip being configured to control the unmanned aerial vehicle to fly along the guiding path.

37. The unmanned aerial vehicle according to any of claims 27 to 36, wherein the image obtaining apparatus is further configured to:
obtain an image photographed by the unmanned aerial vehicle at a start point position;
obtain images photographed by the unmanned aerial vehicle at preset intervals during the flight; and
the vision chip is further configured to:
determine whether an image matching the image photographed at the start point position exists in the images photographed by the unmanned aerial vehicle at the preset intervals during the flight; and
if yes, the flight control chip controls the unmanned aerial vehicle to end the flight.

38. The apparatus according to claim 37, wherein if the vision chip determines that the image matching the image photographed at the start point position does not exist in the images photographed by the unmanned aerial vehicle during the flight, the flight control chip controls the unmanned aerial vehicle to end the flight at an end point of the edge or the area between the edges of the geometric pattern.

39. The unmanned aerial vehicle according to any of claims 27 to 38, wherein
the geometric pattern comprises a pattern formed by any of the following objects:
an electric wire, a communication cable, a pipeline, a wind turbine, a signal tower, a bridge or a road.

40. An unmanned aerial vehicle, comprising a memory and a processor, wherein the memory stores a computer program, and when the computer program is executed by the processor, the processor is enabled to perform the method according to any of claims 1 to 13.

41. A non-volatile computer readable storage medium, wherein the computer readable storage medium stores a computer executable instruction, and when the computer executable instruction is executed by the unmanned aerial vehicle, the unmanned aerial vehicle is enabled to perform the method according to any of claims 1 to 13.
